Europäisches Patentamt

European Patent Office

Office européen des brevets

(19)

(11) Publication number: **0 063 871**
**A1**

(12) **EUROPEAN PATENT APPLICATION**

(21) Application number: **82301653.0**

(22) Date of filing: **30.03.82**

(51) Int. Cl.³: **F 16 D 65/56**

(30) Priority: **29.04.81 GB 8113186**

(43) Date of publication of application: **03.11.82**
**Bulletin 82/44**

(84) Designated Contracting States: **DE FR GB IT NL SE**

(71) Applicant: **GENERAL MOTORS FRANCE, 56/58 Avenue Louis Roche, F-92231 Gennevilliers Seine (FR)**

(72) Inventor: **Rocchi, Jean-Claude, 25 Place du Marché, F-92700 Colombes (FR)**
Inventor: **Gregoire, Gabriel, 6 Les Grands Clos, F-95270 Asnieres Sur Oise (FR)**

(74) Representative: **Haines, Arthur Donald et al, General Motors Limited Patent Section P.O. Box 242 Delaware Drive, Tongwell Milton Keynes MK15 8HA (GB)**

(54) **Disc brake assembly.**

(57) A disc brake assembly 10 which has hydraulic actuation for service braking, mechanical actuation for parking braking via lever 56, and automatic adjustment to compensate for brake pad wear. Automatic adjustment of the position of the piston 20 of the assembly 10 is produced by means of a cone clutch arrangement 46 between a screw-threaded adjustor sleeve 40 and the piston 20, the screw-threaded adjustor sleeve 40 being mounted on a screw-threaded portion 38 of an actuator screw 32 which is rotatably mounted in a screw-threaded bore 34 of opposite hand to screw-threaded portion 38. Actuator screw 32 can be advanced or retracted within bore 34 by arcuate movement of parking brake lever 56 to apply or release the brake mechanically.

0063871
ADH/328

DISC BRAKE ASSEMBLY

This invention relates to a disc brake assembly, in particular a disc brake assembly which has hydraulic actuation for service braking, mechanical actuation for parking braking, and automatic adjustment to compensate for brake pad wear.

Disc brake assemblies for motor vehicles are known in which a brake pad is urged into contact with a brake disc as a result of the movement of a piston within a cylinder caused by an increase in pressure developed in hydraulic fluid held in said cylinder during service braking, there being means whereby said piston and brake pad may be mechanically urged into contact with said brake disc upon the operation of a parking brake mechanism of the vehicle. A desirable feature of disc brake assemblies is that means should be provided for the automatic compensation of brake pad wear during the service life of the assemblies, to ensure that the optimum distance of travel of the brake pads relative to the brake disc is maintained throughout said service life.

An example of a disc brake assembly having hydraulic and mechanical actuation of the brakes and having a wear adjustor therefor is disclosed in British Patent Specification 1 297 495. In the assembly disclosed in this British Patent Specification service braking is achieved by hydraulic actuation of a first piston, parking brake actuation is achieved by the mechanical movement of a second piston within the first piston by means of a coarse-pitched threaded actuator, and compensation for wear in the brake pads of the assembly is achieved by means of a one-way clutch mechanism coupling the first piston to the second piston of the brake assembly. The one-way clutch utilised in this brake assembly results in adjustment for wear occuring positively in one direction only, which, in turn, means that it is necessary to rotate the piston or parking brake lever in order to re-set the parking brake arrangement for usage with a new set of unworn brake pads. Moreover the assembly is a design which is somewhat intricate and contains a substantial number of accurately shaped parts, and therefore is somewhat expensive to manufacture.

According to the present invention, there is provided a disc brake assembly comprising a housing, a cup-shaped piston which is a sliding seal fit in a chamber in the housing, and actuable by an increase in pressure in hydraulic fluid within said chamber so as to move a brake pad mounted on the closed end of said piston into engagement with a brake disc; an actuator screw mounted for both axial and rotational movement in the housing and having a fine-threaded portion thereof extending through the chamber into the piston, said actuator screw being threadedly engaged in said housing by means of a coarse-threaded portion of opposite hand to said fine-threaded portion; an adjustor sleeve threadedly engaged with said fine-threaded portion of said actuator screw and having a shaped surface formed upon one end thereof which is engageable with a complementary shaped surface formed within said piston adjacent the closed end thereof to form a clutch means between said adjustor sleeve and piston; piston retraction means; means for rotating said actuator screw in said housing to advance or retract said actuator screw axially within said housing; and adjustor sleeve stop means within said piston which co-operates with said adjustor sleeve during hydraulic actuation of said piston to adjust the position of said sleeve relative to said piston to compensate for wear in said brake pad.

The shaped surface of the adjustor sleeve may be a coned surface or a serrated surface.

Preferably said adjustor sleeve stop means is an annular member retained in a groove formed inside said piston.

The piston retraction means preferably is a distortable annular seal retained in a groove in said housing between said piston and said housing.

The coarse-threaded portion of the actuator screw can be threadedly engaged with a correspondingly threaded portion of the housing. Alternatively, a portion of the housing forming a base of the hydraulic chamber has an aperture formed therein co-axial with the longitudinal axis of said cup-shaped piston, into which aperture is secured an internally threaded sleeve, into which is threadedly engaged said coarse-threaded portion of said acutator member.

The invention and how it may be performed are hereinafter particularly described with reference to the accompanying drawings, in which,

Figure 1 is a cross-section view of a portion of one embodiment of a disc brake assembly according to the present invention;

Figure 2 is a similar cross-section view of a second embodiment of a disc brake assembly according to the present invention; and

Figure 3 is a similar cross-section view of a third embodiment of a disc brake assembly according to the present invention.

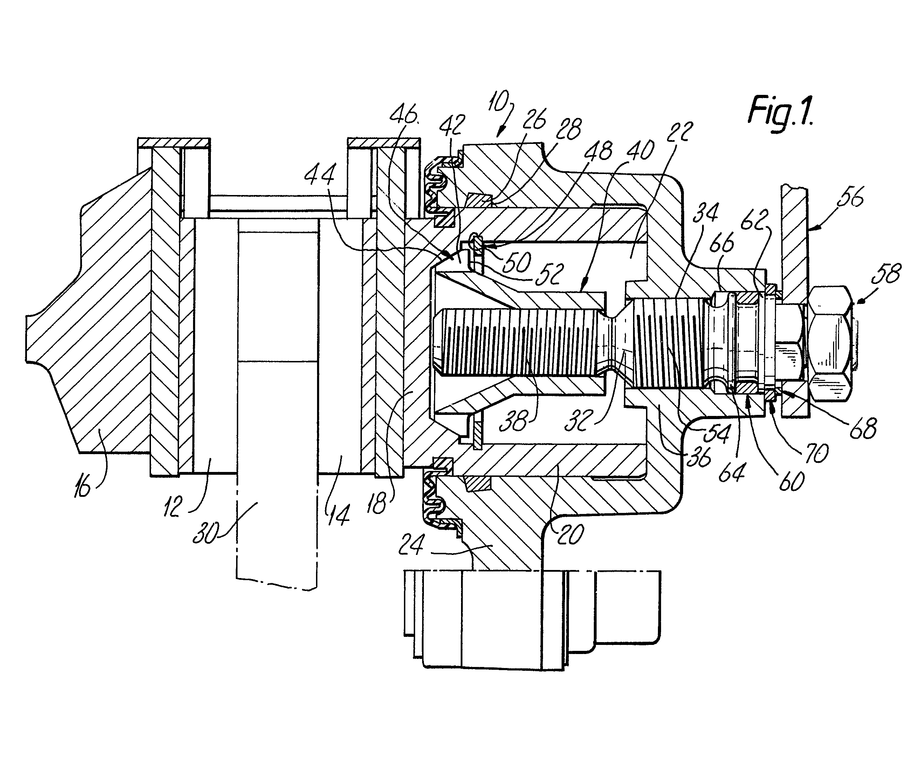

Referring now to Figure 1 of the accompanying drawings, there is shown a portion of a disc brake assembly 10 which includes opposed brake pads 12, 14, one of which is attached to a sliding caliper 16, the other brake pad 14 being mounted on and indexed to the closed end 18 of a cup-shaped piston 20 which is a sliding seal-fit in a chamber 22 within a housing 24 of the disc brake assembly 10. Sealing ring 26 housed in an annular groove 28 in the housing 24 prevents any leakage of hydraulic fluid contained within chamber 22 between piston 20 and the housing 24. The chamber 22 is connected to a master cylinder (not shown) of a motor vehicle and is filled with hydraulic fluid. Pressurisation of the hydraulic fluid in chamber 22 results in movement of piston 20 towards the left, as shown in Figure 1, in order to thrust the brake pad 14 into contact with a rotary brake disc 30 connected to a wheel (not shown) of the motor vehicle, and, by reaction, cause the other brake pad 12 attached to the sliding caliper 16 to be pressed into contact with the other side of the brake disc 30 in a manner well known in the art.

Movement of the piston 20 towards the left as shown in Figure 1 distorts the annular sealing ring 26 before sliding movement of the piston 20 relative to the sealing ring takes place. When the hydraulic pressure in chamber 22 is released, the annular sealing ring 26 returns to its undistorted shape, applying in the process a return force to the piston 20 which is sufficient to cause the piston to move back into the housing a distance sufficient to release the associated brake pads 12, 14 from contact with the brake disc 30.

A parking brake portion of the disc brake assembly 10 comprises an actuator screw 32 rotatably mounted in a threaded bore 34 within an end wall 36 of the housing 24, said actuator screw having a fine-threaded portion 38 at the free end thereof which extends within the cup-shaped piston 20. An adjustor sleeve 40 is threadedly engaged with said fine-threaded portion 38, and has a coned surface 42 formed upon one end thereof. This coned surface 42 is engageable with a complementary coned surface 44 formed within the piston 20 adjacent the closed end 18 thereof to form a cone clutch 46 between the adjustor sleeve 40 and the piston 20. An annular circlip 48 is retained within an annular groove 50 inside the cup-shaped piston 20 at a predetermined distance from a rear surface 52 of the end of the adjustor sleeve 40 bearing the coned surface 42, the distance between the annular circlip 48 and the rear surface 52 being the predetermined clearance required to allow the piston 20 to move back into the housing 24 upon the release of hydraulic pressure in the chamber 22. This annular circlip 48 co-operates with the adjustor sleeve 40 during hyraulic actuation of the brake assembly to take up wear occurring in the brake pads in a manner which will be described in more detail hereinafter.

The actuator screw 32 is mounted for both axial and rotational movements in housing 24 by means of a coarse-threaded portion 54 on the actuator screw 32 threadedly engaging with the threaded bore 34 in housing 24. The coarse threaded portion 54 is of opposite hand to the fine-threaded portion 38 of actuator screw 32. Actuator screw 32 is both rotationally and axially moved within the threaded bore 34 by rotating the screw 32 by means of a lever arm 56 mounted on the end of the screw protruding from the threaded bore 34 by means of locking nut 58. The actuator screw 32 is rotationally sealed within the housing 24 by means of an annular seal 60 held between abutments 62, 64 on the actuator screw 32, and sealing against the wall of a stepped bore 66 formed in the housing 24 adjacent the threaded bore 34. A spacing washer 68 and a compressible seal 70 are also trapped between the lever arm 56 and the end of the housing 24 to aid in the prevention of dirt or other contaminants entering the stepped bore 66 in housing 24.

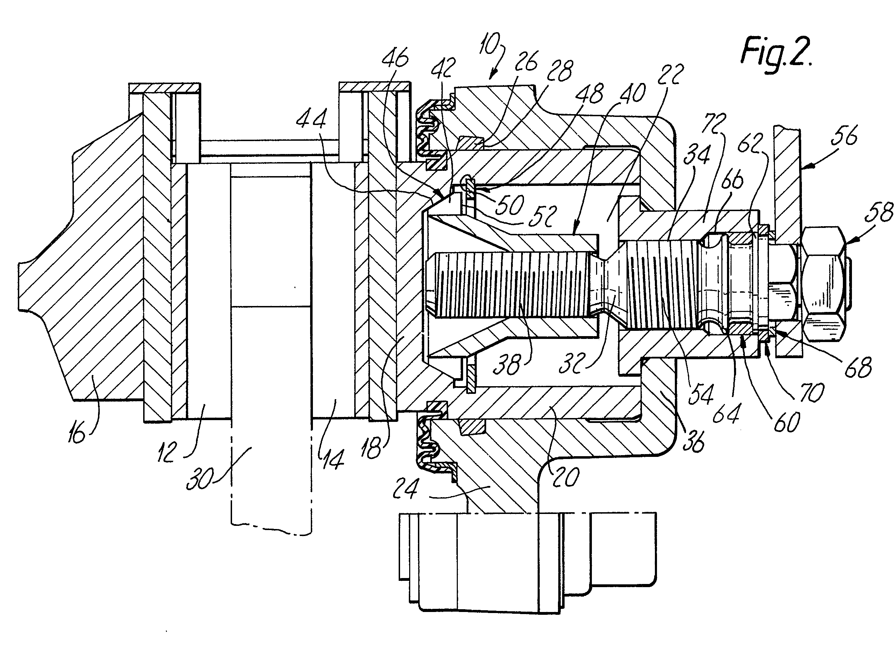

The disc brake assembly shown in Figure 2 is a variation on the disc brake assembly shown in Figure 1, and like parts are identified by the same reference numbers as used in Figure 1. In the embodiment shown in Figure 2, the threaded bore 34 and the stepped bore 66 are formed in a sleeve 72 which is secured within an aperture in the end wall 36 by, for example, welding. The use of a threaded sleeve 72 in place of the threaded

end section of the housing 24 shown in Figure 1 has advantages from the manufacturing point of view. The operation of the disc brake assembly shown in Figure 2 is exactly the same as the operation of the disc brake assembly shown in Figure 1.

### OPERATION

During service braking of the brake assembly of the present invention, hydraulic fluid from a master cylinder is fed to the chamber 22 to increase the hydraulic pressure therein and thus drive the cup-shaped piston 20 towards the left as shown in Figure 1, so as to apply the brake pads 12, 14 to each side of the brake disc 30 as already described. With new, or relatively unworn, brake pads, the distance travelled by the piston 20 in order to apply the brake pad to the brake disc is less than the predetermined clearance provided between the annular circlip 48 and the rear surface 52 of the conical portion of the adjustor sleeve 40. Consequently the adjustor sleeve 40 remains stationary upon the actuator screw 32, with the result that the cone clutch 46 becomes disengaged. Similarly, when the hydraulic pressure in chamber 22 is released, the return motion of the piston 20 under the restoring force exerted by the annular sealing ring 26 results in the re-engagement of the cone clutch 46.

As the brake pads wear after repeated applications of the brake, the distance of travel required by the piston 20 in order to apply the brake pads 12, 14 to the brake disc 30 gradually increases until the predetermined clearance between the annular circlip 48 and the rear surface 52 of the conical portion on adjustor sleeve 40 is eliminated. Once this occurs, further movement of the piston 20 towards the brake disc 30 results in a force being applied to the rear surface 52 by the annular circlip 48. The co-efficient of friction existing between the annular circlip 48 and the rear surface 52 is less than the co-efficient of friction existing between the fine-threaded portion 38 of the actuator screw 32 and the adjustor sleeve 40. When the force exerted upon the rear surface 52 by the annular circlip 48 exceeds the co-efficient of friction between the fine-threaded portion 38 and the adjustor sleeve 40, the adjustor sleeve 40 will commence to rotate upon the fine-threaded portion 38 of the actuator screw 32 and will advance along the actuator screw 32 towards the left as shown in Figure 1. This movement of the adjustor sleeve 40 relative to the actuator screw 32 will continue until the brake pads 12, 14 come into engagement with the brake disc 30. Upon subsequent release of the brake, the piston 20 will be retracted into the housing 24 until the cone clutch 36 re-engages. Since the adjustor sleeve 40 has advanced along the actuator screw 32 during actuation of the brake, the piston 20 upon retraction takes up a new position within the housing, in which new position the predetermined clearance provided between the annular circlip 48 and the rear surface 52 is re-established, and the position of the piston 20 is adjusted to compensate for the wear occurring in the brake pads 12, 14.

When it is necessary to apply the parking brake mechanism, the lever arm 56 is rotated in order to turn the acutator screw 32 within the housing 24 so as to advance the actuator screw 32 to the left, as shown in Figure 1, relative to the housing 24. Since the cone clutch 46 is engaged and the piston 20 can only move axially with respect to housing 24, the actuator sleeve 40 does not rotate. Since the fine-threaded portion 38 of the actuator screw 32 is of opposite hand to the coarse-threaded portion 54 of the actuator screw 32, the rotational advance of the actuator screw 32 within the housing 24 also produces an axial movement of the adjustor sleeve 40 towards the left as shown in Figure 1. Thus,

- 8 -                                        0063871

as the parking brake mechanism is applied, the adjustor sleeve 40 moves through a total distance equivalent to the sum of the distance moved by the actuator screw 32 and the distance moved by the adjustor sleeve 40 upon the fine-threaded portion 38 of the actuator screw 32. This combined movement of the adjustor sleeve 40 axially along the fine-threaded portion 38 of the actuator screw 32 results in the piston 20 moving towards the left as seen in Figure 1 so as to apply the brake pads 12, 14 to the brake disc 30.

To release the applied parking brake mechanism, the lever arm 56 is released and rotated in the reverse direction from the direction required to apply the parking brake mechanism. This movement rotates the actuator screw 32 in the opposite direction, thus reversing the direction of movement of the actuator screw 32 and of the adjustor sleeve 40, and allows the piston 20 to be retracted back into the housing 24 as a result of the restoring force exerted thereon by means of the annular sealing ring 26. Once the parking brake lever 56 has been released, the disc brake assembly in the released position is restored to a position of balance in which the cone clutch 46 is engaged and the predetermined clearance between the annular circlip 48 and the rear surface 52 is restored.

If the parking brake mechanism has been used to stop the motor vehicle from a high speed or over a long distance (such as, for example, when braking the motor vehicle during the descent of a mountain road), it is possible that there would have been enough wear occurring in the brake pads 12, 14 to produce the situation that the release of the lever arm 56 would result in the actuator screw 32 moving the adjustor sleeve 40 sufficiently far in the right hand direction as shown in Figure 1 as to release the cone clutch 46 and bring the rear surface 52 into contact with the annular circlip 48. This would produce the situation similar to the wear adjustment situation met with in hydraulic actuation of the brakes, and the actuator sleeve 40 would rotate upon the fine-threaded portion 38 of the actuator screw 32 in order to partially compensate for the wear that has occurred in the brake pads 12, 14. Full compensation for that wear would then be achieved upon the next hydraulic application of the brakes.

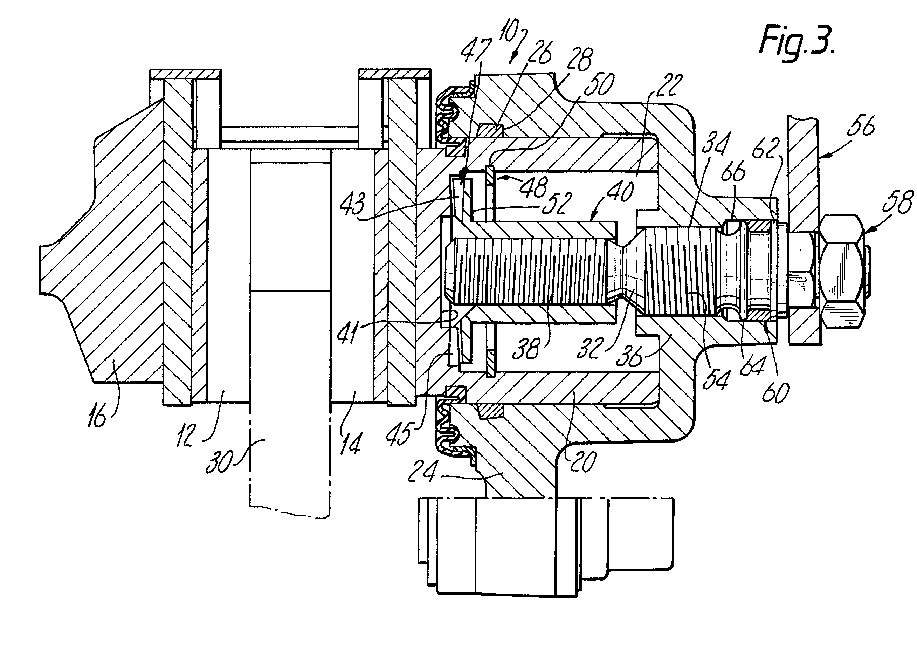

A modification of the disc brake assembly shown in Figure 1 is shown in cross-section in Figure 3 of the accompanying drawings, in which like components are identified by like reference numerals. The fundamental differences between the disc brake assemblies shown in Figures 1 and 3 are that the coned surface 42 of the adjustor sleeve 40 in Figure 1 is replaced by an annular serrated surface 43 in Figure 3, the closed end 18 of the piston 20 is provided with a circular dished portion 41, and the periphery of this dished portion is surrounded with an annular serrated surface 45 which is complementary to annular serrated surface 43 of the adjustor sleeve 40. Thus the cone clutch 46 shown in Figure 1 is replaced in Figure 3 by a dog-clutch 47 which comprises the inter-engageable annular serrated surfaces 43 and 45. Apart from these changes in structure, the operation of the disc brake assembly shown in Figure 3 is exactly the same as the operation of the disc brake assembly shown in Figure 1.

A disc brake assembly according to the present invention provides a self-adjusting hydraulically actuated brake assembly with parking brake mechanism incorporated therein, which has a minimum of moving parts and can be readily and economically produced. Since the design does not employ any form of one way clutch, there is no inherent problem involved in re-setting the assembly in order to fit new brake pads to the disc brake assembly.

Claims:

1.        A disc brake assembly (10) comprising a housing (24), and a cup-shaped piston (20) which is a sliding seal fit in a chamber (22) in the housing, and actuable by an increase in pressure in hydraulic fluid within said chamber so as to move a brake pad (14) mounted on the closed end (18) of said piston (20) into engagement with the brake disc (30), <u>characterised in that</u> the assembly includes an actuator screw (32) mounted for both axial and rotational movement in the housing (24) and having a fine-threaded portion (38) thereof extending through the chamber (22) into the piston (20), said actuator screw being threadedly engaged in said housing (24) by means of a coarse-threaded portion (54) of opposite hand to said fine-threaded portion; an adjustor sleeve (40) threadedly engaged with said fine-threaded portion (38) of said actuator screw (32) and having a shaped surface (42; 43) formed upon one end thereof which is engageable with a complementary shaped surface (44; 45) formed within said piston (20) adjacent the closed end (18) thereof to form a clutch means (46; 47) between said adjustor sleeve (40) and said piston (20); piston retraction means (26); lever means (56) for rotating said actuator screw (32) in said housing; and adjustor sleeve stop means (48) within said piston (20) which co-operates with said adjustor sleeve (40) during hydraulic actuation of said piston (20) to adjust the position of said sleeve (40) relative to said piston (20) to compensate for wear in said brake pad (14).

2.        A disc brake assembly according to claim 1, <u>characterised in that</u> said stop means is an annular member (48) retained in a groove (50) formed inside said cup-shaped piston (20).

3.　　　　　　A disc brake assembly according to claim 1 or 2, <u>characterised in that</u> the piston retraction means is a distortable annular seal (26) retained in a groove (28) in said housing (24) between said cup-shaped piston (20) and said housing.

4.　　　　　　A disc brake assembly according to any one of the preceding claims, <u>characterised in that</u> the adjustor sleeve (40) has a coned surface (42) formed upon said one end which is engageable with a complementary coned surface (44) formed within said piston (20) to form said clutch means (46).

5.　　　　　　A disc brake assembly according to any one of claims 1 to 3, <u>characterised in that</u> the adjustor sleeve (40) has an annular serrated surface (43) formed upon said one end which is engageable with a complementary annular serrated surface (45) formed within said piston (20) to form said clutch means (47).

6.　　　　　　A disc brake assembly according to any one of the preceding claims, <u>characterised in that</u> a portion (36) of said housing (24) forming a base of said chamber has an aperture formed therein co-axial with the longitudinal axis of said cup-shaped piston (20), into which aperture is secured an internally-threaded sleeve (72), into which is threadedly engaged said coarse-threaded portion (54) of said actuator screw (32).

Fig.1.

Fig.2.

Fig.3.

3/3

0063871

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-1 169 781 (MESSIER) <br> * page 2, line 41 to page 4, line 42; figures 1-10 * | 1,3 | F 16 D 65/56 |
| Y | FR-A-1 319 419 (REP) <br> * page 2, right-hand column, second paragraph to page 3, right-hand column, paragraph 6; figures 1,2* | 1,3 | |
| A | DE-A-2 409 812 (KNORR) <br><br> * page 10, paragraph 3 to page 12, paragraph 2; figures 1,2 * & GB-A-1 494 961 | 1,2,4,6 | |
| D,A | FR-A-2 107 468 (GENERAL MOROTS) <br> * page 4, line 25 to page 5, line 31; figures 1-3 * & GB-A-1 297495 | 1-4 | **TECHNICAL FIELDS SEARCHED (Int. Cl. 3)** <br><br> F 16 D |
| A | US-A-3 976 168 (YAMAMOTO) <br> * whole document * | 1,3,6 | |
| A | FR-A-2 410 179 (CITROEN) <br> * page 3, line 16 to page 4, line 7; figures 1,2 * & GB-A-2 008 698 | 1,3,5 | |
| A | DE-B-1 221 501 (DUNLOP) <br> * column 3, lines 17-25; figure 2 * | 6 | |

-/-

The present search report has been drawn up for all claims

| Place of search | Date of completion of the search | Examiner |
|---|---|---|
| THE HAGUE | 05-08-1982 | KIESLINGER J |

**EUROPEAN SEARCH REPORT**

European Patent Office

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | GB-A-2 054 776 (WATANABE)<br>* Page 2, lines 27-34; figure 1 *<br><br>--- | 1,6 | |
| A | US-A-3 797 611 (HURT)<br><br>----- | | |
| | | | TECHNICAL FIELDS SEARCHED (Int. Cl. ³) |

The present search report has been drawn up for all claims

| Place of search | Date of completion of the search | Examiner |
|---|---|---|
| THE HAGUE | 05-08-1982 | KIESLINGER J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82